(19) **Europäisches Patentamt / European Patent Office / Office européen des brevets**

(11) **EP 2 436 920 B1**

(12) **EUROPEAN PATENT SPECIFICATION**

(45) Date of publication and mention
of the grant of the patent:
**07.11.2018 Bulletin 2018/45**

(51) Int Cl.:
***F03D 7/02*** (2006.01)    ***H02P 9/00*** (2006.01)

(86) International application number:
**PCT/JP2010/059149**

(21) Application number: **10780664.8**

(22) Date of filing: **28.05.2010**

(87) International publication number:
**WO 2010/137710 (02.12.2010 Gazette 2010/48)**

(54) **WIND POWER GENERATION CONTROL DEVICE AND WIND POWER GENERATION CONTROL METHOD**

VORRICHTUNG ZUR WINDKRAFTERZEUGUNGSSTEUERUNG UND VERFAHREN ZUR WINDKRAFTERZEUGUNGSSTEUERUNG

DISPOSITIF ET PROCÉDÉ DE COMMANDE DE GÉNÉRATION D'ÉNERGIE ÉOLIENNE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **28.05.2009 JP 2009129111**

(43) Date of publication of application:
**04.04.2012 Bulletin 2012/14**

(73) Proprietor: **Zephyr Corporation
Tokyo 160-0023 (JP)**

(72) Inventors:
• **ITO, Ryosuke
Tokyo 160-0023 (JP)**
• **OKUBO, Takanori
Nishitokyo-shi
Tokyo 188-0002 (JP)**

• **CHIKASHIGE, Tadaaki
Kawasaki-shi
Kanagawa 214-0034 (JP)**
• **YAMAZAKI, Takashi
Tokyo
2040022 (JP)**
• **MATSUMIYA, Hikaru
Tokyo 157-0066 (JP)**

(74) Representative: **Lucas, Brian Ronald
Lucas & Co.
135 Westhall Road
Warlingham, Surrey CR6 9HJ (GB)**

(56) References cited:
**EP-A1- 1 990 539**    **WO-A1-02/068819**
**WO-A1-2004/047284**    **JP-A- S6 339 500**
**JP-A- 63 039 500**    **JP-A- 2002 119 095**
**JP-A- 2005 224 079**    **US-A1- 2003 071 467**
**US-A1- 2006 028 025**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a wind power generation control device which controls a wind power generator that converts wind power to electric power and a wind power generation control method of controlling a wind power generator .

Background Art

Hitherto, wind power generators which convert wind power to electric power have drawn attention as power generating devices which do not cause environmental pollution and have been put into practical use. Particularly, small-sized wind power generators having a rated output of several kilowatts (kW) have been used as power sources for lighting equipment and the like in businesses, schools, households and the like, power sources for heaters, measurement devices for temperature, humidity and the like in greenhouses, or power sources for street lights and the like for shopping districts, main roads and the like.

In this type of small-sized power generator, there has been a concern that, if rotational speed of a wind mill is increased by an increase in a wind speed, noise might occur due to vibration of a blade. Also, if generated power rapidly increases with the increase in the rotational speed of the wind mill, power supply to commercial power-supply systems rapidly increases, which might cause the voltage and frequency on the commercial system side to fluctuate.

Thus, in order to prevent such problems, generated power is controlled by any one of a generation voltage, a generation current and a rotational speed or a combination thereof in strong winds.

For example, a technology in which a load current is increased by raising an output voltage of a converter connected to an output stage of a power generator in strong winds and the power generator is electromagnetically braked so as to suppress a rise in a rotational speed of a wind mill is disclosed (See Patent Document 1, for example).

Also, a technology of suppressing a rotational speed without stopping power generation is disclosed in which a rotational speed of a windmill is detected, and if the detected rotational speed exceeds a reference rotational speed set in advance, a power conversion circuit is controlled so that a ratio ($V_{out}/V_{in}$) between an input voltage ($V_{in}$) and an output voltage ($V_{out}$) of a power conversion circuit becomes larger and the input voltage ($V_{in}$) is lowered and a rotational speed of a wind mill is suppressed (See Patent Document 2, for example).

    Patent Document 1: Japanese Patent No. 3423663
    Patent Document 2: Japanese Patent No. 3523587

Document JP-A-63-39500 is considered as the closest prior art and shows a wind power generation control device and method according to the preamble of claims 1 and 5.

Disclosure of the Invention

However, there has been a problem that an optimal electric power amount corresponding to a wind speed cannot be efficiently obtained in power control in a relatively low wind-speed region approximately at a wind speed of 10 (m/s) or less.

The present invention was made in view of the above-described actual state and has an object to provide a wind power generation control device which controls a wind power generator which can efficiently obtain an optimal power amount corresponding to a wind speed in a relatively low wind speed region and a wind power generation control method of controlling the wind power generator.

The present invention has employed the following configuration in order to solve the above problems.

That is, according to the present invention, a wind power generation control device according to claim 1 and a control method according to claim 5 are provided.

Also, in the wind power generation control device according to the present invention, the control means preferably controls the wind power generator such that output power calculated by the electric power calculating means agrees with blade aerodynamic properties stored in the blade aerodynamic properties storage means.

Also, in the wind power generation control device according to the present invention, the control means preferably controls the wind power generator in a range of rotational speeds in which the rotational speed detected by the rotational speed detecting means is in a predetermined wind speed region.

Also, in the wind power generation control device according to the present invention, the predetermined wind speed region is preferably a wind speed region at approximately 10 (m/s) or less.

Also, in the wind power generation control device according to the present invention, if a rotational speed at the current time detected by the rotational speed detecting means exceeds a maximum rotational speed corresponding to the maximum wind speed in the predetermined wind speed region, the control means preferably controls the wind power generator so that the maximum rotational speed is not exceeded.

Also, in the wind power generation control device according to the present invention, the blade aerodynamic properties storage means preferably stores in advance blade aerodynamic properties indicating a relationship between a rotational speed of the wind turbine blade and a torque generated by the wind power generator.

Also, in the wind power generation control device according to the present invention, the control means preferably controls the wind power generator by directly short-circuiting an armature coil provided in the wind power generator at a predetermined duty cycle.

Also, in the wind power generation control device according to the present invention, the control means preferably controls the wind power generator by intermittently short-circuiting the armature coil.

Also, according to an aspect of the present invention, a wind power generation control method according to the present invention is a wind power generation control method of controlling a wind power generator using a wind turbine blade having a fixed pitch angle, characterized in that an output current value outputted by the wind power generator is detected, an output voltage value outputted by the wind power generator is detected, and a rotational speed of the wind turbine blade is detected, and on the basis of the detected output current value at the current time, the detected output voltage value at the current time, and the detected rotational speed at the current time, output power at the rotational speed at the current time is calculated, and on the basis of the calculated output power and the blade aerodynamic properties, which are properties inherent to the wind turbine blade stored in the memory in advance, the wind power generator is controlled so that the calculated output power agrees with the blade aerodynamic properties.

Brief Description of the Drawings

Figure 1 is a block diagram illustrating a wind power generation control device to which the present invention is applied;
Figure 2 is a diagram illustrating a relationship among a rotational speed of a wind turbine blade, electric power outputted by a wind power generator, and duty factor added to the wind power generator;
Figure 3 is a flowchart illustrating a flow of wind power generation control processing executed in the wind power generation control device to which the present invention is applied; and
Figure 4 is a diagram illustrating a relationship among a wind speed, electric power outputted by the wind power generator, and a rotational speed of the wind turbine blade.

Best Mode for Carrying Out the Invention

Embodiments of the present invention will be described below in detail by referring to the attached drawings.

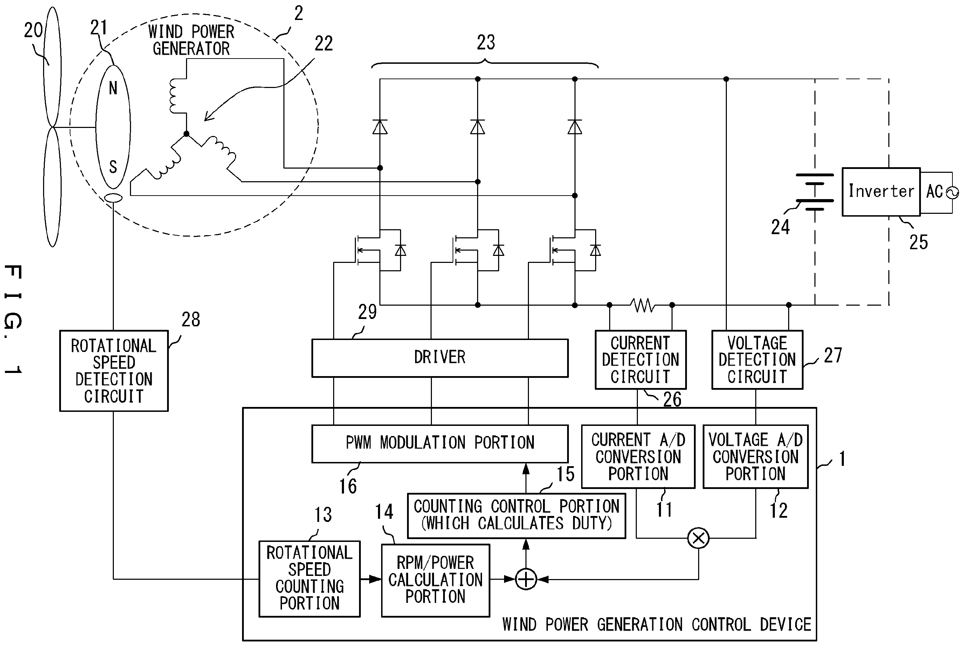

Figure 1 is a block diagram illustrating a wind power generation control device to which the present invention is applied.

In Figure 1, a wind power generation control device 1 to which the present invention is applied constitutes a wind power generation system which efficiently generates power by controlling a wind power generator 2.

The wind power generator 2 is provided with a permanent magnet 21 and a three-phase winding 22 and converts an alternating current generated by rotation of a wind turbine blade 20 whose pitch angle is fixed to a direct current by a rectifier 23 and supplies it to a storage cell 24 and a load 25 connected to this storage cell 24. Since the wind turbine blade 20 has the pitch angle fixed, its structure is relatively simple and has fewer failures as compared with the type in which the pitch angle can be changed or the type in which the blade can be folded, and reduction in size and weight is easy.

The wind power generation control device 1 includes a current A/D conversion portion 11, a voltage A/D conversion portion 12, a rotational speed counting portion 13, an rpm/power calculation portion 14, a counting control portion 15, and a PWM modulation portion 16.

The current A/D conversion portion 11 detects an output current value outputted by the wind power generator 2 through a current detection circuit 26 and converts an analog value to a digital value. The voltage A/D conversion portion 12 detects an output voltage value outputted by the wind power generator 2 through a voltage detection circuit 27 and converts an analog value to a digital value.

The rotational speed counting portion 13 detects and obtains a rotational speed of the wind turbine blade 20 through a rotational speed detection circuit 28. The rpm/power calculation portion 14 calculates a theoretical output value of the wind power generator 2 on the basis of the rotational speed obtained by the rotational speed counting portion 13 and blade aerodynamic properties, which are properties determined in advance and inherent to the wind turbine blade 20. Here, with regard to the blade aerodynamic properties, which are inherent to the wind turbine blade 20, the blade aerodynamic properties indicating the relationship between a rotational speed of the wind turbine blade 20 and a torque generated by the wind power generator 2 may be stored in a memory as a theoretical properties table or a multi-dimensional simulated expression such as WP = a $\times$ $x^n$ + b $\times$ $x^{n-1}$ + ... + c $\times$ x + d (WP: theoretical output value, x: rotational number, a, b, c, d: coefficient) or a three-dimensional simulated expression such as WP = $a_1$ $\times$ $x^3$ + $b_1$ $\times$ $x^2$ + $c_1$ $\times$ x + $d_1$ (WP: theoretical output value, x: rotational number, $a_1$, $b_1$, $c_1$, $d_1$: coefficient), for example, may be used.

The above multi-dimensional simulated expression is a simulated expression on the basis of a theoretical-properties calculation formula as illustrated below.

That is, with respect to an arbitrary wind velocity U (m/s) and a rotational speed N (rpm) of a rotor, a power generation output P (W) of the wind power generator can be acquired as in the following expression 1 in accordance with the blade element momentum theory.

[Expression 1]

$$P = \frac{1}{2}\rho U^3 \cdot A \cdot C_P \quad \cdots \text{Expression 1}$$

where

P: power generation output (W)
$\rho$: air density (kg/m³)
U: wind speed (m/s)
A: projected area of rotor = $\pi R^2$ (m²)
R: radius of rotor (m)
$C_P$: power coefficient

Also, the power coefficient $C_P$ can be acquired by the following expression 2:

[Expression 2]

$$C_P = \int_{\text{root}}^{1} \frac{2\sigma \cos\phi C_L \sin\phi [1 - \varepsilon \cot\phi]}{(1-a)(1+a')} d\xi \quad \cdots \text{Expression 2}$$

where

[Expression 3]

$$\sigma \text{ (local solidity)} \equiv \frac{cB}{2\pi r}$$

c: code distribution
B: number of blades
$C_L$: lift coefficient
$\phi$: inflow angle (rad)

[Expression 4]

$$\varepsilon \equiv \frac{C_D}{C_L}$$

$C_D$: drag coefficient

[Expression 5]

$$\xi = \frac{r}{R}$$

r: distance of blade from the center of rotor in the j-axis direction (m)
a: guiding coefficient (axial direction component)
a': guiding coefficient (tangential direction component)

Each variable regarding the above expression 2 is a function of a position r of the blade, and the lift coefficient and the drag coefficient are obtained from blade type data used for the blade at the position r.

Also, the guiding coefficient a and the guiding coefficient a' are given by an algebra equation describing a dynamic system of a flow field using $\phi$ as a variable in the blade element momentum theory as follows:

[Expression 6]

$$a = \frac{1}{\dfrac{4\sin^2\phi}{\sigma C_N} + 1} \quad \cdots \text{Expression 3}$$

[Expression 7]

$$a' = \frac{1}{\dfrac{4\sin\phi\cos\phi}{\sigma C_F} - 1} \quad \cdots \text{Expression 4}$$

where
[Expression 8]

$$C_N \equiv C_L \cos\phi + C_D \sin\phi \cdots \text{Expression 5}$$

[Expression 9]

$$C_F \equiv C_L \sin\phi - C_D \cos\phi \cdots \text{Expression 6}$$

In order to acquire the guiding coefficient a indicated in the above-described expression 3 and the guiding coefficient a' indicated in the expression 4, repeated approximation by Steps 1 to 9 as follows is used. It is assumed that a blade torsion distribution $\theta(r)$ of the blade and a chord distribution c(r) are given in advance. Also, blade type performance data on the selected blade type is assumed to be known.

Step 1: basic parameter (wind speed U,

[Expression 10]

$$\text{Rotor angular speed } \omega = \frac{\pi}{30}N$$

, blade torsion distribution $\theta(r)$, and chord distribution c(r)) are determined.

Step 2: Initial values of the guiding coefficient a and the guiding coefficient a' (a = a' = 0, for example) are given.
Step 3: At a radial position r, from a speed triangle,

[Expression 11]

$$\tan\phi = \frac{(1-a)U}{(1+a')r\omega}$$

$\phi$ is acquired by the above expression.
Step 4: An attack angle $\alpha$ is obtained by $\alpha = \phi - \theta$. Step 5: From the blade type data, $C_L(\alpha)$ and $C_D(\alpha)$ are determined.
Step 6: By using the above expression 5 and the expression 6, $C_N$ and $C_F$ are calculated.
Step 7: From the above expression 3 and the expression 4, a new guiding coefficient a and guiding coefficient a' are calculated.
Step 8: The above steps are repeated until the guiding coefficient a and the guiding coefficient a' converge within a predetermined error range.
Step 9: If the guiding coefficient a and the guiding coefficient a' converge, output performances are acquired by using the above expression 1. The above integration is obtained by numerical integration in general.

By supposition of a dynamic model,

[Expression 12]

there is no solution of

$$\alpha > \frac{1}{3}$$

Also, in actuality, such a flow state might be encountered at a local portion of the blade. In order to handle such a case, experimental expressions for correcting $C_N$ and $C_F$ are disclosed in the following documents, for example.
Document: "Aerodynamics of Wind Turbines" by M.O.L. Hansen (issued by EARTHSCAN)
Also, the method of correcting the above $C_n$ and $C_p$ is not limited to the above-described expressions but numeral expressions deformed within a range not departing from the gist of the present invention may be used and not limited to the above-described blade element momentum theory, other theories may be utilized within a range not departing from the gist of the present invention.
The counting control portion 15 calculates an output power value of the wind power generator 2 at the current time on the basis of an output current value converted by the current A/D conversion portion 11 and an output voltage value converted by the voltage A/D conversion portion 12 and on the basis of the output power value at the current time of this calculation and a theoretical output value calculated by the rpm/power calculation portion 14, calculates duty (duty factor) of a switching circuit provided in the rectifier 23 so that electric power corresponding to the theoretical output value is outputted.
Then, the PWM modulation portion 16 controls the rectifier 23 through a driver 29 by controlling rotation of the wind turbine blade 20 through pulse width modulation (PWM) so that the wind power generator 2 outputs the power corresponding to the theoretical output value on the basis of the duty calculated by the counting control portion 15.
The PWM modulation portion 16 may control the wind power generator 2 by directly short-circuiting an armature coil provided in the wind power generator 2 with a predetermined duty cycle. At that time, the PWM modulation portion 16 can also control the wind power generator 2 by intermittently short-circuiting the armature coil.
As described above, since the wind power generation control device 1 controls the wind power generator 2 on the basis of the output power outputted by the wind power generator 2, that is, on the basis of the output voltage and the output current, the wind power generation control device 1 can control the wind power generator 2 without being affected by the voltage applied to the load 25.

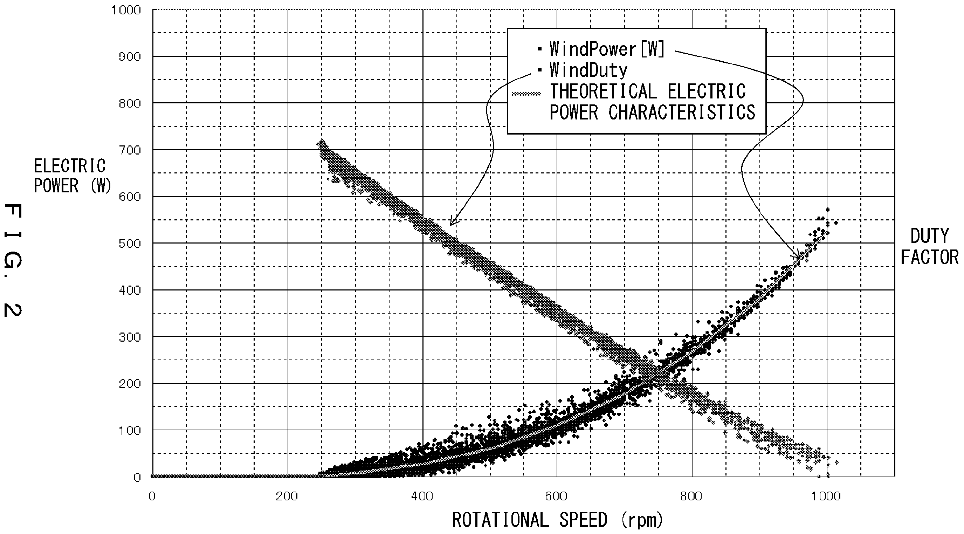

Figure 2 is a diagram illustrating a relationship among the rotational speed of the wind turbine blade, the power outputted by the wind power generator, and the duty factor applied to the wind power generator.
Each function of the wind power generation control device 1 to which the present invention is applied has been described by using Figure 1, and the wind power generator 2 controlled by the wind power generation control device 1 indicates the relationship as in Figure 2. That is, if the rotational speed of the wind turbine blade 20 increases, the power outputted by the wind power generator 2 increases substantially in the manner of multi-dimensional function as indicated by circular points in the graph in Figure 2, but it does not necessarily match the functional curve.

Thus, by adding the duty calculated as above to the wind power generator 2, as the theoretical electric power properties illustrated in Figure 2, that is, as blade aerodynamic properties indicating the relationship between the rotational speed of the wind turbine blade 20 and the torque generated by the wind power generator 2, the wind power generator 2 is controlled so that the relationship between rotational speed of the wind turbine blade 20 and the power outputted by the wind power generator 2 agrees with a multi-dimensional simulated expression such as $WP = a \times x^n + b \times x^{n-1} + ... + c \times x + d$ (WP: theoretical output value, x: rotational number, a, b, c, d: coefficient) or a cubic function such as $WP = a_1 \times x^3 + b_1 \times x^2 + c_1 \times x + d_1$ (WP: theoretical output value, x: rotational number, $a_1, b_1, c_1, d_1$: coefficient), for example.

The theoretical aerodynamic properties illustrated in Figure 2 correspond to the portion below the local maximum point of the cubic function (in the X-axis direction).

Subsequently, the processing flow of wind power generation control in such a wind power generation system will be described by using a flowchart.

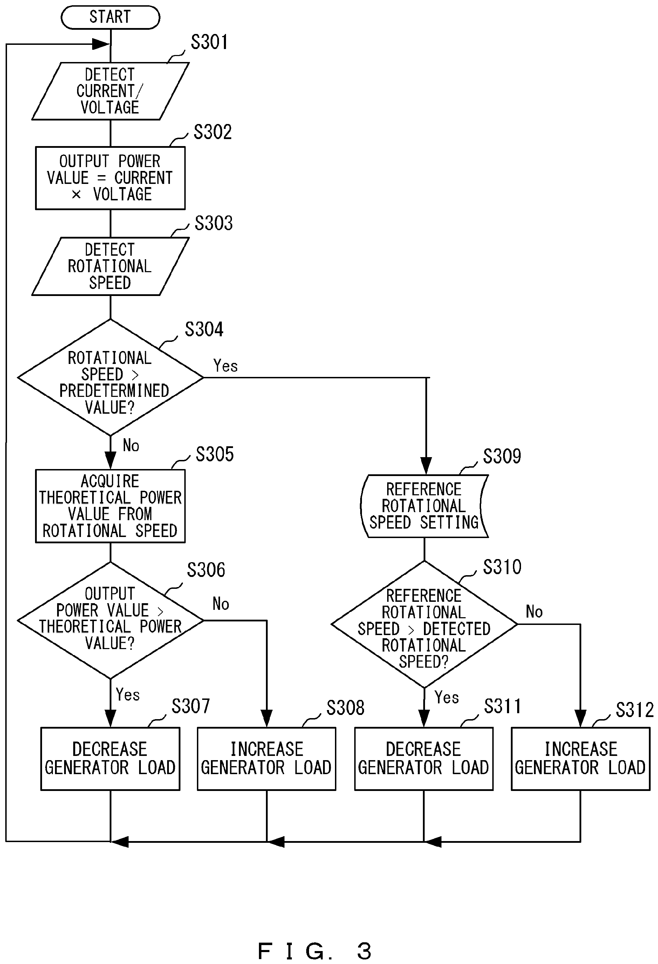

Figure 3 is a flowchart illustrating the flow of the wind power generation control processing executed in the wind power generation control device to which the present invention is applied.

At Step S301, an output current value and an output voltage value outputted by the wind power generator 2 are detected and obtained, and at Step S302, an output power value (output power = current × voltage) is calculated from them.

In parallel with that, at Step S303, the rotational speed of the wind turbine blade 20 is detected and obtained.

Then, at Step S304, it is determined whether the rotational speed obtained at Step S303 exceeds a predetermined value or not. As the predetermined value, a rotational speed 1000 (rpm) corresponding to the wind speed 10 (m/s) can be used, for example.

If it is determined that the rotational speed does not exceed the predetermined value, in other words, if the detected rotational speed is within a range of rotational speeds in a predetermined wind speed region (Step S304: No), at Step S305, a theoretical power value is acquired from the rotational speed obtained at Step S303. As the theoretical power value, for example, the blade aerodynamic properties indicating the relationship between the rotational speed of the wind turbine blade 20 and the torque generated by the wind power generator 2 may be used or a multi-dimensional simulated expression such as $WP = a \times x^n + b \times x^{n-1} + ... + c \times x + d$ (WP: theoretical output value, x: rotational number, a, b, c, d: coefficient) or a three-dimensional simulated expression such as $WP = a_1 \times x^3 + b_1 \times x^2 + c_1 \times x + d_1$ (WP: theoretical output value, x: rotational number, $a_1, b_1, c_1, d_1$: coefficient) may be used.

Subsequently, at Step S306, it is determined whether the output power value calculated at Step S302 exceeds the theoretical power value calculated at Step S305.

If it is determined that the output power value exceeds the theoretical power value (Step S306: Yes), at Step S307, the load of the wind power generator 2 is decreased by controlling the rectifier 23 on the basis of a duty calculated so as to decrease the power outputted by the wind power generator 2. On the other hand, if it is determined that the output power value does not exceed the theoretical power value (Step S306: No), at Step S308, the load of the wind power generator 2 is increased by controlling the rectifier 23 on the basis of the duty calculated so as to increase the power outputted by the wind power generator 2.

Also, if it is determined at Step S304 that the obtained rotational speedexceeds the predetermined value, in other words, if the detected rotational speed exceeds the range of rotational speeds in the predetermined wind speed region (Step S304: Yes), at Step S309, a reference rotational speed or 1000 (rpm), for example, is set.

Subsequently, at Step S310, it is determined whether the reference rotational speed set at Step S309 exceeds the rotational speed detected at Step S303 or not.

If it is determined that the reference rotational speed exceeds the detected rotational speed (Step S310: Yes), at Step S311, the load of the wind power generator 2 is decreased by controlling the rectifier 23 on the basis of the duty calculated so as to decrease the power outputted by the wind power generator 2. On the other hand, if it is determined that the reference rotational speed does not exceed the detected rotational speed (Step S310: No), atStepS312, the load of the wind power generator 2 is increased by controlling the rectifier 23 on the basis of the duty calculated so as to increase the power outputted by the wind power generator 2.

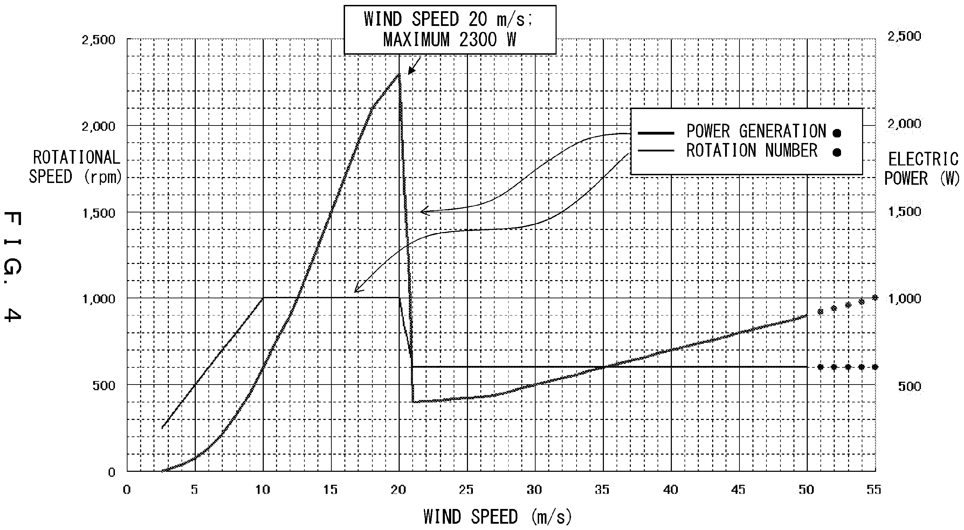

Figure 4 is a diagram illustrating a relationship among the wind speed, the power outputted by the wind power generator, and the rotational speed of the wind turbine blade.

As illustrated in Figure 4, by executing the wind power generation control processing executed in the wind power generation control device 1, the wind power generator 2 can continuously realize seamless power generation in a region at the wind speed 2 (m/s) or more. Then, the output of the maximum electric power 2300 (W) is realized at the wind speed 20 (m/s) and then, while the output is increased in accordance with an increase in the wind intensity, transition is made to a slow and gentle curve. This curve is the curve represented by the above-described multi-dimensional simulated equation.

In general, in the wind power generator, the output is increased in proportion to the cube of the wind speed, but in practice, in order to prevent destruction of the wind turbine blade, noise or the like, the output is limited by some means in general. The wind power generation control device 1 to which the present invention is applied has an advantage of raising power generation efficiency in the low wind speed region from the wind speed 2 to 10 (m/s).

Also, since the wind power generation control device 1 to which the invention is applied controls the wind power generator 2 on the basis of the output power outputted by the wind power generator 2, that is, the output voltage and the output current, the wind power generator 2 can be controlled without being affected by the voltage applied to the load 25.

The embodiment of the present invention has been described by referring to the attached drawings, but the above-described embodiment of the present invention can be realized by hardware as a function of a wind power generation control device or by firmware or software by means of a DSP (Digital Signal Processor) board or a CPU board.

Also, the wind power generation control device to which the present invention is applied is not limited to the above-described embodiment as long as the functions are executed, and it is needless to say that the device may be a single-piece device, a system or an integrated device constituted by a plurality of devices or a system in which processing is executed through a network such as a LAN, WAN or the like.

Also, the present invention can be realized by a system consisting of memory such as a CPU, ROM and RAM connected to a bus, an input device, an output device, an external storage device, a medium driving device, and a network connecting device. That is, it is needless to say that the present invention is also realized by supplying memory such as a ROM and a RAM, an external recording device or a portable recording medium which records a software program which realizes the above-described system of the embodiment to the wind power generation control device and by reading out and executing the program by a computer of the wind power generation control device.

In this case, the program itself read out of the portable recording medium or the like realizes the new function of the present invention, and the portable recording medium or the like which records the program constitutes the present invention.

As the portable recording medium which supplies the program, a flexible disk, a hard disk, an optical disk, a magnet-optical disk, a CD-ROM, a CD-R, a DVD-ROM, a DVD-RAM, a magnetic tape, a non-volatile memory card, a ROM card, various recording media which record the program through an e-mail or a network connecting device (in other words, a communication line) such as a personal computer communication or the like can be used, for example.

Also, by executing the program read out on memory by a computer (information processing device), the above-described function of the embodiment is realized and also, when an OS operating on the computer executes a part of or the whole of the actual processing on the basis of an instruction of the program, the above-described function of the embodiment is also realized by the processing.

Moreover, after the program read out of the portable recording medium or the program (data) provided by a program (data) provider is written in memory provided in a function expansion board inserted into the computer or a function expansion unit connected to the computer, when a CPU or the like provided in the function expansion board or the function expansion unit executes a part of or the whole of the actual processing on the basis of the instruction of the program, the above-described function of the embodiment can be also realized by the processing.

That is, the present invention is not limited to the above-described embodiment but can take various configurations or shapes within the range not departing from the scope of the present invention as claimed.

The present invention exerts an advantage that higher power generation efficiency can be obtained even with a fixed blade by finding a theoretical output value at the rotational speed from the theoretical properties of a wind turbine prepared in advance so that the output at a relatively low wind speed region becomes the highest and by adjusting the duty (duty factor) of a switching circuit so that the maximum power generation amount according to the theoretical output value is obtained.

**Claims**

1. A wind power generation control device which controls a wind power generator (2) using a wind turbine blade (20) having a fixed pitch angle, comprising:

   current detecting means (26) which detects an output current value outputted by said wind power generator (2);
   voltage detecting means (27) which detects an output voltage value outputted by said wind power generator (2);
   rotational speed detecting means (28) which detects a rotational speed of said wind turbine blade (20);
   blade aerodynamic properties storage means which stores blade aerodynamic properties in advance, which are properties inherent to said wind turbine blade (20), indicating a relationship between a theoretical expression on the basis of the rotational speed of said wind turbine blade (20) and a torque generated by said wind power generator (2);

electric power calculating means which calculates output power value at the current time on the basis of the output current value at the current time detected by said current detecting means (26) and the output voltage value at the current time detected by said voltage detecting means (27);

a rpm/power calculation portion (14) which calculates a theoretical output power value, $WP = a \times x^n + b \times x^{n-1} + ... + c \times x + d$ (WP: theoretical output power value, x: rotational number, a, b, c, d: coefficient), on the basis of the rotational speed at the current time detected by said rotational speed detecting means (28) and blade aerodynamic properties stored in blade aerodynamic properties storage means; and

control means (1) which controls said wind power generator (2), **characterized in that**,

when the rotational speed at the current time does not exceed a predetermined value, said control means acquires a theoretical output power value from the rpm/power calculation portion (14), and

controls said wind power generator (2), such that said electric power calculating means calculates duty of a switching circuit provided in a rectifier (23), on the basis of the output power value at the current time calculated by said electric power calculating means and the theoretical output power value calculated by said rpm/power calculation portion (14), so that electric power corresponding to the theoretical output power value is outputted, and load on the wind power generator (2) is decreased by controlling the rectifier (23) on the basis of the duty calculated so as to decrease the power outputted by the wind power generator (2) in a case where the output power value calculated by said electric power calculating means exceeds the theoretical output power value calculated by said rpm/power calculation portion (14), and the load on the wind power generator (2) is increased by controlling the rectifier (23) on the basis of the duty calculated so as to increase the power outputted by the wind power generator (2) in a case where the output power value calculated by said electric power calculating means does not exceed the theoretical output power value calculated by said rpm/power calculation portion (14); and

when the rotational speed at the current time exceeds the predetermined value, a reference rotational speed is set, and

when it is determined that the reference rotational speed exceeds the rotational speed detected by said rotational speed detecting means (28), the load of the wind power generator (2) is decreased by controlling the rectifier (23) on the basis of the duty calculated so as to decrease the power outputted by the wind power generator (2), and when it is determined that the reference rotational speed does not exceed the rotational speed detected by said rotational speed detecting means (28), the load of the wind power generator (2) is increased by controlling the rectifier (23) on the basis of the duty calculated so as to increase the power outputted by the wind power generator (2).

2.  The wind power generation control device according to claim 1, wherein
    said control means (1) controls said wind power generator (2) in a range of rotational speeds in which the rotational speed detected by said rotational speed detecting means (28) corresponds to a predetermined wind speed region.

3.  The wind power generation control device according to claim 1, wherein
    said control means (1) controls said wind power generator (2) by directly short-circuiting an armature coil provided in said wind power generator (2) at a predetermined duty cycle.

4.  The wind power generation control device according to claim 3, wherein
    said control means (1) controls said wind power generator (2) by intermittently short-circuiting said armature coil.

5.  A wind power generation control method of controlling a wind power generator (2) using a wind turbine blade (20) having a fixed pitch angle, wherein
    an output current value outputted by said wind power generator (2) is detected;
    an output voltage value outputted by said wind power generator (2) is detected;
    a rotational speed of said wind turbine blade (20) is detected; on the basis of said detected output current value at the current time and said detected output voltage value at the current time, an output power value at the current time is calculated;
    calculating a theoretical output power on the basis of said detected rotational speed at the current time and the blade aerodynamic properties stored in memory in advance, which are properties inherent to said wind turbine blade (20) indicating a relationship between a theoretical expression on the basis of the rotational speed of said wind turbine blade (20) and a torque generated by said wind power generator (2);
    said theoretical output power value WP is calculated according to the formula, $WP = a \times x^n + b \times x^{n-1} + ... + c \times x + d$ (WP: theoretical output power value, x: rotational number, a, b, c, d: coefficient), on the basis of the rotational speed at the current time detected by said rotational speed detecting means (28) and the blade aerodynamic properties stored in blade aerodynamic properties storage means;
a control means (1) controls said wind power generator (2), **characterized in that**,
when the rotational speed at the current time does not exceed a predetermined value,
the control means (1) acquires a theoretical output power value from a rpm/power calculation portion (14), and calculates duty of a switching circuit provided in a rectifier (23), on the basis of the output power value at the current time calculated by a electric power calculating means and the theoretical output power value calculated by said rpm/power calculation portion (14), so that electric power corresponding to the theoretical output power value is outputted, and load on the wind power generator (2) is decreased by controlling the rectifier (23) on the basis of the duty calculated so as to decrease the power outputted by the wind power generator (2) in a case where the output power value calculated by said electric power calculating means exceeds the theoretical output power value calculated by said rpm/power calculation portion (14), and the load on the wind power generator (2) is increased by controlling the rectifier (23) on the basis of the duty calculated so as to increase the power outputted by the wind power generator (2) in a case where the output power value calculated by said electric power calculating means does not exceed the theoretical output power value calculated by said rpm/power calculation portion (14), and

when the rotational speed at the current time exceeds the predetermined value, a reference rotational speed is set, and

when it is determined that the reference rotational speed exceeds the rotational speed detected by said rotational speed detecting means (28), the load of the wind power generator (2) is decreased by controlling the rectifier (23) on the basis of the duty calculated so as to decrease the power outputted by the wind power generator (2), and

when it is determined that the reference rotational speed does not exceed the rotational speed detected by said rotational speed detecting means (28), the load of the wind power generator (2) is increased by controlling the rectifier (23) on the basis of the duty calculated so as to increase the power outputted by the wind power generator (2).

## Patentansprüche

1. Windstromerzeugungssteuervorrichtung, die einen Windstromerzeuger (2) steuert, der ein Rotorblatt (20) verwendet, das einen starren Einstellwinkel aufweist, umfassend:

ein Stromdetektionsmittel (26), das einen Ausgabestromwert detektiert, der durch den Windstromerzeuger (2) ausgegeben wird;
ein Spannungsdetektionsmittel (27), das einen Ausgabespannungswert detektiert, der durch den Windstromerzeuger (2) ausgegeben wird;
ein Drehgeschwindigkeitsdetektionsmittel (28), das eine Drehgeschwindigkeit von dem Rotorblatt (20) detektiert;
ein Blattaerodynamikeigenschaftenspeichermittel, das im Voraus Blattaerodynamikeigenschaften speichert, was Eigenschaften sind, die dem Rotorblatt (20) innewohnen, wodurch eine Beziehung zwischen einem theoretischen Ausdruck auf Basis der Drehgeschwindigkeit des Rotorblatts (20) und einen Drehmoment, das durch den Windstromerzeuger (2) erzeugt wird, angegeben wird;
ein elektrisches Leistungsberechnungsmittel, das den Ausgabeleistungswert zum derzeitigen Zeitpunkt auf Basis des Ausgabestromwerts zum derzeitigen Zeitpunkt, der durch das Stromdetektionsmittel (26) detektiert wird, und des Ausgabespannungswerts zum derzeitigen Zeitpunkt, der durch das Spannungsdetektionsmittel (27) detektiert wird, berechnet;
einen rpm/Leistungsberechnungsteil (14), der einen theoretischen Ausgabeleistungswert berechnet, $WP = a \times x^n + b \times n^{n-1} + ... + c \times x + d$ (WP: theoretischer Ausgabeleistungswert; x: Drehzahl, a, b, c, d: Koeffizient), und zwar auf Basis der Drehgeschwindigkeit zum derzeitigen Zeitpunkt, die durch das Drehgeschwindigkeitsdetektionsmittel (28) detektiert wird, und der Blattaerodynamikeigenschaften, die in dem Blattaerodynamikeigenschaftenspeichermittel gespeichert sind; und ein Steuermittel (1), das den Windstromerzeuger (2) steuert, **dadurch gekennzeichnet, dass**,

wenn die Drehgeschwindigkeit zum derzeitigen Zeitpunkt einen vorbestimmten Wert nicht übersteigt, das Steuermittel einen theoretischen Ausgabeleistungswert von dem rpm/Leistungsberechnungsteil (14) erwirbt, und den Windstromerzeuger (2) so steuert, dass das elektrische Leistungsberechnungsmittel die relative Einschaltdauer [Englisch: duty] von einem Schaltkreis, der in einem Gleichrichter (23) bereitgestellt ist, berechnet, und zwar auf Basis des Ausgabeleistungswerts zum derzeitigen Zeitpunkt, der durch das elektrische Leistungsberechnungsmittel berechnet wird, und des theoretischen Ausgabeleistungswerts, der durch den rpm/Leistungsberechnungsteil (14) berechnet wird, so dass die elektrische Leistung ausgegeben wird, die dem theoretischen Ausgabeleistungswert entspricht, und die Last an dem Windstromerzeuger (2) vermindert wird, indem der Gleichrichter (23) auf Basis der berechneten relative Einschaltdauer gesteuert wird, um so die Leistung, die durch den Windstromerzeuger (2) ausgegeben wird, in einem Fall zu vermindern, in dem der Ausgabeleistungswert, der durch das elektrische Leistungsberechnungsmittel berechnet wird, den theoretischen Ausgabeleistungswert übersteigt, der durch den rpm/Leistungsberechnungsteil (14) berechnet wird, und die Last an dem Windstromerzeuger (2) erhöht wird, indem der Gleichrichter (23) auf Basis der berechneten relativen Einschaltdauer gesteuert wird, um so die Leistung, die durch den Windstromerzeuger (2) ausgegeben wird, in einem Fall zu erhöhen, in dem der Ausgabeleistungswert, der durch das elektrische Leistungsberechnungsmittel berechnet wird, den theoretischen Ausgabeleistungswert nicht übersteigt, der durch den rpm/Leistungsberechnungsteil (14) berechnet wird; und

wenn die Drehgeschwindigkeit zum derzeitigen Zeitpunkt den vorbestimmten Wert übersteigt, eine Bezugsdrehgeschwindigkeit festgelegt wird, und

wenn bestimmt wird, dass die Bezugsdrehgeschwindigkeit die Drehgeschwindigkeit übersteigt, die durch das Drehgeschwindigkeitsdetektionsmittel (28) detektiert wird, die Last des Windstromerzeugers (2) vermindert wird, indem der Gleichrichter (23) auf Basis der berechneten relativen Einschaltdauer gesteuert wird, um so die Leistung zu vermindern, die durch den Windstromerzeuger (2) ausgegeben wird, und

wenn bestimmt wird, dass die Bezugsdrehgeschwindigkeit die Drehgeschwindigkeit nicht übersteigt, die durch das Drehgeschwindigkeitsdetektionsmittel (28) detektiert wird, die Last des Windstromerzeugers (2) erhöht wird, indem der Gleichrichter (23) auf Basis der berechneten relativen Einschaltdauer gesteuert wird, um so die Leistung zu erhöhen, die durch den Windstromerzeuger (2) ausgegeben wird.

2. Windstromerzeugungssteuervorrichtung nach Anspruch 1, wobei das Steuermittel (1) den Windstromerzeuger (2) in einem Bereich von Drehgeschwindigkeiten steuert, in dem die Drehgeschwindigkeit, die durch das Drehgeschwindigkeitsdetektionsmittel (28) detektiert wird, einer vorbestimmten Windgeschwindigkeitsregion entspricht.

3. Windstromerzeugungssteuervorrichtung nach Anspruch 1, wobei das Steuermittel (1) den Windstromerzeuger (2) mit einer vorbestimmten Einschaltdauer [Englisch: duty cycle] durch direktes Kurzschließen einer Ankerspule, die in dem Windkrafterzeuger (2) bereitgestellt ist, steuert.

4. Windstromerzeugungssteuervorrichtung nach Anspruch 3, wobei das Steuermittel (1) den Windstromerzeuger (2) durch intermittierendes Kurzschließen der Ankerspule steuert.

5. Windstromerzeugungssteuerverfahren zum Steuern von einem Windstromerzeuger (2), der ein Rotorblatt (20) verwendet, das einen starren Einstellwinkel aufweist, wobei

ein Ausgabestromwert, der durch den Windstromerzeuger (2) ausgegeben wird, detektiert wird;

ein Ausgabespannungswert, der durch den Windstromerzeuger (2) ausgegeben wird, detektiert wird;

eine Drehgeschwindigkeit des Rotorblatts (20) detektiert wird;

ein Ausgabeleistungswert zum derzeitigen Zeitpunkt berechnet wird, und zwar auf Basis des detektierten Ausgabestromwerts zum derzeitigen Zeitpunkt und des detektierten Ausgabespannungswerts zum derzeitigen Zeitpunkt;

Berechnen von einer theoretischen Ausgabeleistung auf Basis der detektierten Drehgeschwindigkeit zum derzeitigen Zeitpunkt und der Blattaerodynamikeigenschaften, die im Voraus in einem Speicher gespeichert wurden, was Eigenschaften sind, die dem Rotorblatt (20) innewohnen, wodurch eine Beziehung zwischen einem theoretischen Ausdruck auf Basis der Drehgeschwindigkeit des Rotorblatts (20) und einen Drehmoment, das durch den Windstromerzeuger (2) erzeugt wird, angegeben wird;

wobei der theoretischen Ausgabeleistungswert WP gemäß der Formel $WP = a \times x^n + b \times n^{n-1} + ... + c \times x + d$ (WP: theoretischer Ausgabeleistungswert; x: Drehzahl, a, b, c, d: Koeffizient) berechnet wird, und zwar auf Basis der Drehgeschwindigkeit zum derzeitigen Zeitpunkt, die durch das Drehgeschwindigkeitsdetektionsmittel (28) detektiert wird, und der Blattaerodynamikeigenschaften, die in dem Blattaerodynamikeigenschaftenspeichermittel gespeichert sind;

ein Steuermittel (1), das den Windstromerzeuger (2) steuert, **dadurch gekennzeichnet, dass**,

wenn die Drehgeschwindigkeit zum derzeitigen Zeitpunkt einen vorbestimmten Wert nicht übersteigt,

das Steuermittel (1) einen theoretischen Ausgabeleistungswert von dem rpm/Leistungsberechnungsteil (14) erwirbt, und

die relative Einschaltdauer [Englisch: duty] von einem Schaltkreis berechnet, der in einem Gleichrichter (23) bereitgestellt ist, und zwar auf Basis des Ausgabeleistungswerts zum derzeitigen Zeitpunkt, der durch das elektrische Leistungsberechnungsmittel berechnet wird, und des theoretischen Ausgabeleistungswerts, der durch den rpm/Leistungsberechnungsteil (14) berechnet wird, so dass die elektrische Leistung ausgegeben wird, die dem theoretischen Ausgabeleistungswert entspricht, und die Last an dem Windstromerzeuger (2) vermindert wird, indem der Gleichrichter (23) auf Basis der berechneten relativen Einschaltdauer gesteuert wird, um so die Leistung, die durch den Windstromerzeuger (2) ausgegeben wird, in einem Fall zu vermindern, in dem der Ausgabeleistungswert, der durch das elektrische Leistungsberechnungsmittel berechnet wird, den theoretischen Ausgabeleistungswert übersteigt, der durch den rpm/Leistungsberechnungsteil (14) berechnet wird, und die Last an dem Windstromerzeuger (2) erhöht wird, indem der Gleichrichter (23) auf Basis der berechneten relativen Einschaltdauer gesteuert wird, um so die Leistung, die durch den Windstromerzeuger (2) ausgegeben wird, in einem Fall zu erhöhen, in dem der Ausgabeleistungswert, der durch das elektrische Leistungsberechnungsmittel berechnet wird, den theoretischen Ausgabeleistungswert nicht übersteigt, der durch den rpm/Leistungsberechnungsteil (14) berechnet wird; und

wenn die Drehgeschwindigkeit zum derzeitigen Zeitpunkt den vorbestimmten Wert übersteigt, eine Bezugsdrehgeschwindigkeit festgelegt wird, und

wenn bestimmt wird, dass die Bezugsdrehgeschwindigkeit die Drehgeschwindigkeit übersteigt, die durch das Drehgeschwindigkeitsdetektionsmittel (28) detektiert wird, die Last des Windstromerzeugers (2) vermindert wird, indem der Gleichrichter (23) auf Basis der berechneten relativen Einschaltdauer gesteuert wird, um so die Leistung zu vermindern, die durch den Windstromerzeuger (2) ausgegeben wird, und

wenn bestimmt wird, dass die Bezugsdrehgeschwindigkeit die Drehgeschwindigkeit nicht übersteigt, die durch das Drehgeschwindigkeitsdetektionsmittel (28) detektiert wird, die Last des Windstromerzeugers (2) erhöht wird, indem der Gleichrichter (23) auf Basis der berechneten relativen Einschaltdauer gesteuert wird, um so die Leistung zu erhöhen, die durch den Windstromerzeuger (2) ausgegeben wird.


## Revendications

1. Dispositif de commande de génération d'énergie éolienne qui commande un générateur d'énergie éolienne (2) utilisant une pale de turbine éolienne (20) ayant un angle de calage fixe, comprenant :

   un moyen de détection de courant (26) qui détecte une valeur de courant de sortie fournie en sortie par ledit générateur d'énergie éolienne (2) ;
   un moyen de détection de tension (27) qui détecte une valeur de tension de sortie fournie en sortie par ledit générateur d'énergie éolienne (2) ;
   un moyen de détection de vitesse de rotation (28) qui détecte une vitesse de rotation de ladite pale de turbine éolienne (20) ;
   un moyen de stockage de propriétés aérodynamiques de pale qui stocke à l'avance des propriétés aérodynamiques de pale, qui sont des propriétés intrinsèques à ladite pale de turbine éolienne (20), indiquant une relation entre une expression théorique basée sur la vitesse de rotation de ladite pale de turbine éolienne (20) et un couple généré par ledit générateur d'énergie éolienne (2) ;
   un moyen de calcul de puissance électrique qui calcule une valeur de puissance de sortie au moment actuel sur la base de la valeur de courant de sortie au moment actuel détectée par ledit moyen de détection de courant (26) et de la valeur de tension de sortie au moment actuel détectée par ledit moyen de détection de tension (27) ;
   une portion de calcul tour/min/puissance (14) qui calcule une valeur de puissance de sortie théorique, $WP = a \times x^n + b \times x^{n-1} + ... + c \times x + d$ (WP : valeur de puissance de sortie théorique, x : nombre de rotations, a, b, c, d : coefficients), sur la base de la vitesse de rotation au moment actuel détectée par ledit moyen de détection de vitesse de rotation (28) et des propriétés aérodynamiques de pale stockées dans le moyen de stockage de propriétés aérodynamiques de pale ; et
   un moyen de commande (1) qui commande ledit générateur d'énergie éolienne (2), **caractérisé en ce que**, lorsque la vitesse de rotation au moment actuel ne dépasse pas une valeur prédéterminée, ledit moyen de commande acquiert une valeur de puissance de sortie théorique auprès de la portion de calcul de tour/min/puissance (14), et
   commande ledit générateur d'énergie éolienne (2), de sorte que ledit moyen de calcul de puissance électrique calcule le cycle de service d'un circuit de commutation ménagé dans un redresseur (23), sur la base de la valeur de puissance de sortie au moment actuel calculée par ledit moyen de calcul de puissance électrique et de la valeur de puissance de sortie théorique calculée par ladite portion de calcul de tour/min/puissance (14), de sorte que la puissance électrique correspondant à la valeur de puissance de sortie théorique soit fournie en sortie, et une charge sur le générateur d'énergie éolienne (2) est diminuée en commandant le redresseur (23) sur la base du cycle de service calculé de façon à diminuer la puissance fournie en sortie par le générateur d'énergie éolienne (2) dans un cas où la valeur de puissance de sortie calculée par ledit moyen de calcul de puissance électrique dépasse la valeur de puissance de sortie théorique calculée par ladite portion de calcul de tour/min/puissance (14), et la charge sur le générateur d'énergie éolienne (2) est augmentée en commandant le redresseur (23) sur la base du cycle de service calculé de façon à augmenter la puissance fournie en sortie par le générateur d'énergie éolienne (2) dans un cas où la valeur de puissance de sortie calculée par ledit moyen de calcul de puissance électrique ne dépasse pas la valeur de puissance de sortie théorique calculée par ladite portion de calcul de tour/min/puissance (14) ; et

lorsque la vitesse de rotation au moment actuel dépasse la valeur prédéterminée, une vitesse de rotation de référence est fixée, et

lorsqu'il est déterminé que la vitesse de rotation de référence dépasse la vitesse de rotation détectée par ledit moyen de détection de vitesse de rotation (28), la charge du générateur d'énergie éolienne (2) est diminuée en commandant le redresseur (23) sur la base du cycle de service calculé de façon à diminuer la puissance fournie en sortie par le générateur d'énergie éolienne (2), et

lorsqu'il est déterminé que la vitesse de rotation de référence ne dépasse pas la vitesse de rotation détectée par ledit moyen de détection de vitesse de rotation (28), la charge du générateur d'énergie éolienne (2) est augmentée en commandant le redresseur (23) sur la base du cycle de service calculé de façon à augmenter la puissance fournie en sortie par le générateur d'énergie éolienne (2).

2.  Dispositif de commande de génération d'énergie éolienne selon la revendication 1, dans lequel

    ledit moyen de commande (1) commande ledit générateur d'énergie éolienne (2) dans une plage de vitesses de rotation dans laquelle la vitesse de rotation détectée par ledit moyen de détection de vitesse de rotation (28) correspond à une région de vitesse du vent prédéterminée.

3.  Dispositif de commande de génération d'énergie éolienne selon la revendication dans lequel

    ledit moyen de commande (1) commande ledit générateur d'énergie éolienne (2) en court-circuitant directement une bobine d'induit ménagée dans ledit générateur d'énergie éolienne (2) à un cycle de service prédéterminé.

4.  Dispositif de commande de génération d'énergie éolienne selon la revendication 3, dans lequel

    ledit moyen de commande (1) commande ledit générateur d'énergie éolienne (2) en court-circuitant de façon intermittente ladite bobine d'induit.

5.  Procédé de commande de génération d'énergie éolienne consistant à commander un générateur d'énergie éolienne (2) à l'aide d'une pale de turbine éolienne (20) ayant un angle de calage fixe, dans lequel

    une valeur de courant de sortie fournie en sortie par ledit générateur d'énergie éolienne (2) est détectée ;
    une valeur de tension de sortie fournie en sortie par ledit générateur d'énergie éolienne (2) est détectée ;
    une vitesse de rotation de ladite pale de turbine éolienne (20) est détectée ; sur la base de ladite valeur de courant de sortie détectée au moment actuel et de ladite valeur de tension de sortie détectée au moment actuel, une valeur de puissance de sortie au moment actuel est calculée ;
    le calcul d'une puissance de sortie théorique sur la base de la vitesse de rotation détectée au moment actuel et des propriétés aérodynamiques de pale stockées à l'avance en mémoire, qui sont des propriétés intrinsèques à ladite pale de turbine éolienne (20) indiquant une relation entre une expression théorique basée sur la vitesse de rotation de ladite pale de turbine éolienne (20) et un couple généré par ledit générateur d'énergie éolienne (2) ;
    ladite valeur de puissance de sortie théorique WP est calculée selon la formule, $WP = a \times x^n + b \times x^{n-1} + ... + c \times x + d$ (WP : valeur de puissance de sortie théorique, x : nombre de rotations, a, b, c, d : coefficients), sur la base de la vitesse de rotation au moment actuel détectée par ledit moyen de détection de vitesse de rotation (28) et des propriétés aérodynamiques de pale stockées dans le moyen de stockage de propriétés aérodynamiques de pale ;
    un moyen de commande (1) commande ledit générateur d'énergie éolienne (2), **caractérisé en ce que**,
    lorsque la vitesse de rotation au moment actuel ne dépasse pas une valeur prédéterminée,
    le moyen de commande (1) acquiert une valeur de puissance de sortie théorique auprès de la portion de calcul de tour/min/puissance (14), et
    calcule un cycle de service d'un circuit de commutation ménagé dans un redresseur (23), sur la base de la valeur de puissance de sortie au moment actuel calculée par un moyen de calcul de puissance électrique et de la valeur de puissance de sortie théorique calculée par ladite portion de calcul de tour/min/puissance (14), de sorte qu'une puissance électrique correspondant à la valeur de puissance de sortie théorique soit fournie en sortie, et une charge sur le générateur d'énergie éolienne (2) est diminuée en commandant le redresseur (23) sur la base du cycle de service calculé de façon à diminuer la puissance fournie en sortie par le générateur d'énergie éolienne (2) dans un cas où la valeur de puissance de sortie calculée par ledit moyen de calcul de puissance électrique dépasse la valeur de puissance de sortie théorique calculée par ladite portion de calcul de tour/min/puissance (14), et la charge sur le générateur d'énergie éolienne (2) est augmentée en commandant le redresseur (23) sur la base du cycle de service calculé de façon à augmenter la puissance fournie en sortie par le générateur d'énergie éolienne (2) dans un cas où la valeur de puissance de sortie calculée par ledit moyen de calcul de puissance électrique ne dépasse pas la valeur de puissance de sortie théorique calculée par ladite portion de calcul de tour/min/puissance (14), et

lorsque la vitesse de rotation au moment actuel dépasse la valeur prédéterminée, une vitesse de rotation de référence est fixée, et

lorsqu'il est déterminé que la vitesse de rotation de référence dépasse la vitesse de rotation détectée par ledit moyen de détection de vitesse de rotation (28), la charge du générateur d'énergie éolienne (2) est diminuée en commandant le redresseur (23) sur la base du cycle de service calculé de façon à diminuer la puissance fournie en sortie par le générateur d'énergie éolienne (2), et

lorsqu'il est déterminé que la vitesse de rotation de référence ne dépasse pas la vitesse de rotation détectée par ledit moyen de détection de vitesse de rotation (28), la charge du générateur d'énergie éolienne (2) est augmentée en commandant le redresseur (23) sur la base du cycle de service calculé de façon à augmenter la puissance fournie en sortie par le générateur d'énergie éolienne (2).

EP 2 436 920 B1

F I G. 1

15

F I G. 2

FIG. 3

F I G. 4

**EP 2 436 920 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3423663 B
- JP 3523587 B
- JP 63039500 A